# EUROPÄISCHE PATENTANMELDUNG

(11) **EP 3 106 238 A1**
(43) Veröffentlichungstag der Anmeldung: **21.12.2016**
(21) Anmeldenummer: 15172897.9
(22) Anmeldetag: 19.06.2015
(51) Int. Cl.: B09C 1/06, C02F 11/00

(54) **VERFAHREN ZUR SANIERUNG KONTAMINIERTER BEREICHE WIE ALTABLAGERUNGEN ODER DEPONIEN**

(71) Anmelder: CDM Smith Consult GmbH, 44793 Bochum (DE)
(72) Erfinder: GAUS, Martin, 64289 Darmstadt (DE); EBERT, Guido, 69469 Weinheim (DE); NESSLER, Oliver, 64665 Alsbach (DE)
(74) Vertreter: Patentanwälte Vomberg & Schart

(57) **Zusammenfassung**

Die Erfindung betrifft ein Verfahren zur Sanierung kontaminierter Bereiche wie Altablagerungen, Deponien oder deponieähnliche Ablagerungen und Altlasten, bei denen kontaminiertes Material mit teer-, harz-, öl- oder wachsähnlicher Konsistenz durch Zugabe von Konditionierungsmitteln chemisch stabilisiert und physikalisch verfestigt wird. Erfindungsgemäß ist vorgesehen, dass mittels eines in vertikaler Richtung bewegten Bodenbearbeitungsgerätes zunächst in säulenartigen, sich jeweils am Rand überlappenden Bodenbereichen kontaminiertes Material mit nicht kontaminiertem Bodenmaterial, das einen ausreichenden Stützkornanteil enthält, zu einer zumindest im wesentlichen homogenen Mischung vermengt und anschließend oder gleichzeitig die Konditionierungsmittel zugegeben werden.

## Beschreibung

Die Erfindung betrifft ein Verfahren zur Sanierung kontaminierter Bereiche wie Altablagerungen, Deponien oder deponieähnliche Ablagerungen und Altlasten, bei denen kontaminiertes Material mit teer-, harz-. öl- oder wachsähnlicher Konsistenz durch Zugabe von Konditionierungsmitteln chemisch stabilisiert und physikalisch verfestigt wird.

In der DE 40 03 362 C2 wird ein Verfahren zur in-situ-Sanierung kontaminierter Bereiche wie natürlicher Böden, künstlicher Auffüllung, Deponien oder Altlasten beschrieben, bei dem der zu sanierende Bereich durch ein Aufbereitungsgerät derart bearbeitet wird, dass er gelöst, gelockert, geschnitten sowie homogen durchmischt wird und bei dem der derart homogene aufbereitete Bereich über dasselbe Aufbereitungsgerät eine mit Mikroorganismen und/oder Nährstoffen bzw. einer Nährlösung angereicherte Suspensionen erhält, um die im kontaminierten Bereich enthaltenen Schadstoffe mikrobiologisch abzubauen. Mit der Suspensionszugabe können auch zur Umwandlung bestimmter spezieller Schadstoffe geeignete Chemikalien eingebracht werden. Ein solches Verfahren setzt jedoch voraus, dass die enthaltenen Schadstoffe mikrobiologisch und/oder chemisch abbaubar sind.

In der DE 196 03 089 A1 wird ein Verfahren zur Sanierung mit Agglomeraten eines mit Teermaterial kontaminierten Bodens beschrieben, bei dem das kontaminierte Material zerkleinert, erwärmt, ggf. mit schadstoffabbauenden Mikroorganismen versetzt und inkubiert wird. Das kontraminierte Material soll zum An- bzw. Aufschmelzen der Teeragglomerate erwärmt werden, und anschließend bei gleichmäßig aufrechterhaltener Temperatur einer Zwangsmischung unterzogen werden. Die Temperatur der Zwangsmischung soll so hoch gehalten werden, dass die Teeragglomerate aufschmelzen, wonach bei der Zwangsmischung eine Verschmierung mit vorhandenen Sand- oder Tonkörperteilchen stattfinden soll.

In der DE 196 13 679 A1 wird zur Konditionierung von feuchtem oder nassem Gelände, insbesondere von Schlammbecken vorgeschlagen, an Ort und Stelle den Schlamm nacheinander in lokal begrenzten Bereichen in Bewegung zu setzen und ein Konditionierungsmittel über eine vorgegebene Schlammtiefe unter gleichzeitiger Durchmischung mit dem Schlamm einzutragen, bis eine hinreichende Verfestigung erreicht wird. Zu diesem Zweck sollen Bodenbearbeitungsgeräte in Form von Vertikal und/oder Horizontalfräsen verwendet werden. Dieses Verfahren ist primär auf eine Bodenverfestigung, nicht jedoch auf eine Sanierung der kontaminierten Bereiche gerichtet.

Verfahren, bei denen die in-situ-Aufbereitung kontaminierter Bereiche durch Einbringen von Zuschlagstoffen "trocken" oder in Form einer "wässrigen" Suspension und ggf. vertikaler Durchmischung verschiedener Schichten auf unterschiedliche Art und Weise erfolgt, um die in einer Bodenmatrix oder in Schlämmen enthaltenen Schadstoffe chemisch zu stabilisieren und/oder physikalisch zu verfestigen, werden jedoch lediglich mit einer begrenzten Bearbeitungstiefe der jeweiligen Ausgangsstoffe bzw. Böden in der Kohle- und Teerverarbeitung oder in der Industrie und Wasserwirtschaft angewendet. Häufig werden die nach dem Stand der Technik benannten Verfahren auch mit Aushubmaßnahmen kombiniert, so dass in abwechselnder Folge Stabilisierungs- und Aushubschritte durchgeführt werden. In vielen Fällen werden auch die verfestigten Schlämme abtransportiert, wonach sie entweder entsorgt oder einer chemischen Behandlung unterzogen werden, bevor sie wieder zurück zum Ursprungsort transportiert werden.

Nach dem Stand der Technik im Übrigen bekannte Bodenmischverfahren, bei denen mittels Mäkler geführten Mischwerkzeugen unter Bindemittelzugabe sogenannte "DSM-Säulen" im Boden erzeugt werden, die unterschiedliche Durchmesser, Eigenschaften und Funktionen haben können, dienen im Wesentlichen einer Baugrundverbesserung, bei der überwiegend eine laterale Durchmischung des Bodens mit der zugeführten Suspension stattfindet. Eine solche Arbeitsweise ist ungeeignet, pastöse oder harzähnliche Ablagerungen zu sanieren.

Es ist Aufgabe der vorliegenden Erfindung, ein Verfahren zu entwickeln, um teer-, harz- oder ölähnliche Materialien, die im Folgenden als kontaminiertes Material bezeichnet werden, in-situ kontrolliert vorzubereiten, um abschließend eine in-situStabilisierung und Verfestigung der Materialien zu ermöglichen.

Diese Aufgabe wird durch das Verfahren nach Anspruch 1 gelöst, das dadurch gekennzeichnet ist, dass mittels eines in vertikaler Richtung bewegten Bodenbearbeitungsgerätes zunächst in säulenartigen, sich jeweils am Rand überlappenden Bodenbereichen kontaminiertes Material mit nicht kontaminierten Bodenmaterial, das einen ausreichenden Stützkornanteil enthält, zu einer zumindest im Wesentlichen homogenen Mischung vermengt und anschließend oder gleichzeitig die Konditionierungsmittel zugegeben werden. Der Vorteil des erfindungsgemäßen Verfahrens liegt darin, dass ohne Transport- und Aushubarbeiten das kontaminierte Material vor Ort durch entsprechende Erhöhung des Stützkornanteils des kontaminierten Bereiches so vorbereitet wird, dass die anschließend zugegebenen Konditionierungsmittel homogen in der Bearbeitungstiefe zugegeben werden können, wodurch aufgrund der zuvor hergestellten homogen Mischung nun eine Stabilisierung und Verfestigung nach dem Stand der Technik ermöglicht wird.

Zur Durchführung des erfindungsgemäßen Verfahrens wird ein Werkzeug verwendet, das mit kombinierten, messerartigen Zerkleinerungs- und Durchmischungsaufsätzen versehen ist und das in den zu bearbeiteten Bereich vertikal eindrehbar ist. Bodenbearbeitungsgeräte, die entsprechendes leisten können, sind beispielsweise aus der DE 44 05 303 C1 oder der DE 10 2008 002 038 A1 bekannt.

Weiterbildungen des Verfahrens sind in den Unteransprüchen beschrieben.

So wird vorzugsweise zumindest ein wesentlicher Teil oder sämtliches Bodenmaterial mit einem ausreichenden Stützkornanteil, das zur Schaffung eines stabilen säulenartigen Bereiches benötigt wird, aus den Erdbereichen entnommen, die unterhalb des kontraminierten Materials liegen. Bei Bedarf kann zusätzliches nicht kontaminiertes Bodenmaterial mit einem ausreichenden Stützkornanteil auf das kontaminierte Material aufgebracht und mit dem Verfahren eingemischt und in der Säule homogenisiert werden. Die erforderliche Durchmischungstiefe (Bearbeitungstiefe) des Materials ist abhängig von dem gewünschten Massenverhältnis zwischen dem kontaminierten Material und dem Boden mit der charakteristischen Korngrößenverteilung. Ggf. müssen zuvor in unterschiedlichen Tiefen Bodenproben entnommen werden, um ein ideales Durchmischungsverhältnis, das in einem Labormaßstab ermittelt wird, herzustellen.

Die Bearbeitungstiefe des säulenartigen Bodenbereiches ist durch die Tiefenreichweite der Bodenbearbeitungsgeräte begrenzt. Daher kann es in Sonderfällen notwendig sein, vorzugsweise während der Durchmischung notwendige Zuschlagstoffe zur Bildung eines ausreichenden Korngerüstes über das Bodenbearbeitungsgerät zuzuführen.

Über das Bodenbearbeitungsgerät lassen sich auch Konditionierungsmittel wie Suspensionen mit Betonit oder Bindemittel wie Zement oder Kalk zugeben. Das Bodenbearbeitungsgerät besitzt hierzu ein drehbares Hohlgestänge sowie entsprechend benötigte radiale Auslassöffnungen, wie dies beispielsweise in der DE 44 05 303 C1 beschrieben wird. Das Bodenbearbeitungsgerät bzw. die hieran befestigten Werkzeuge werden innerhalb einer Säule zur intensiven Homogenisierung bei gleichzeitiger Zugabe von Wasser oder einer zur Reibungsminderung mit Betonit angereicherten Suspension auf- und abbewegt, bis eine ausreichende bzw. gewünschte Homogenisierung des Materialgemenges über die gesamte vertikale Durchmischungstiefe erreicht ist. Die jeweiligen Bearbeitungsparameter wie die Bearbeitungstiefe, die Geschwindigkeit der Auf- und Abbewegung der Werkzeuge, die Rotationsgeschwindigkeit der Werkzeuge und der Zeitpunkt und der Anteil der Zugabe bzw. der Zugabemengen der Konditionierungsmittel wird vor Ort durch Versuche jeweils optimiert.

Vorzugsweise überlappen sich die säulenartigen Bodenbereiche mit dem benachbarten Bodenbereichen zu 5 Vol% bis 30 Vol%. Durch die Überlappungsbereiche wird gewährleistet, dass auch bei vertikaler Bohrabweichung der einzelnen Säule eine ausreichende Überlappung der Säulen und somit eine weitgehende gleiche Homogenisierung das gesamte kontaminierten Volumens gewährleistet werden kann. Vorzugsweise haben die säulenartigen Bereiche jeweils einen Durchmesser von 1,5 m bis 4 m.

Nach einer weiteren Ausgestaltung der Erfindung ist vorgesehen, dass jeder säulenartige Bereich mindestens 2 mal auf- und abwärts in der Bearbeitungstiefe von dem Bearbeitungsgerät durchfahren wird. Vorzugsweise ist die Sinkgeschwindigkeit kleiner als die (aufwärtsgerichtete) Ziehgeschwindigkeit des Bodenbearbeitungsgerätes, wobei sich beim Durchmischen Sinkgeschwindigkeiten zwischen 0,2 m/min bis 1 m/min (bei der Abwärtsbewegung) und Ziehgeschwindigkeiten zwischen 0,5 m/min bis 2 m/min (bei der Aufwärtsbewegung), jeweils bei Rotationsgeschwindigkeiten zwischen 30 U/min bis 90 U/min bewährt haben.

Nach einer weiteren Ausgestaltung der vorliegenden Erfindung werden die Konditionierungsmittel erst dann zugegeben, wenn die bodenbearbeiteten Säulenbereiche einen hinreichend homogenen Stützkornanteil aufweisen.

Das erfindungsgemäße Verfahren wird im Folgenden anhand vom Zeichnungen näher erläutert: Es zeigen
- Fig. 1:: eine schematische Ansicht eines kontaminierten Bereiches mit Apparaten und Anlagen zur dessen Sanierung,
- Fig. 2a bis c:: jeweils Querschnitte durch säulenartige Bodenbereiche vor und nach der Behandlung.

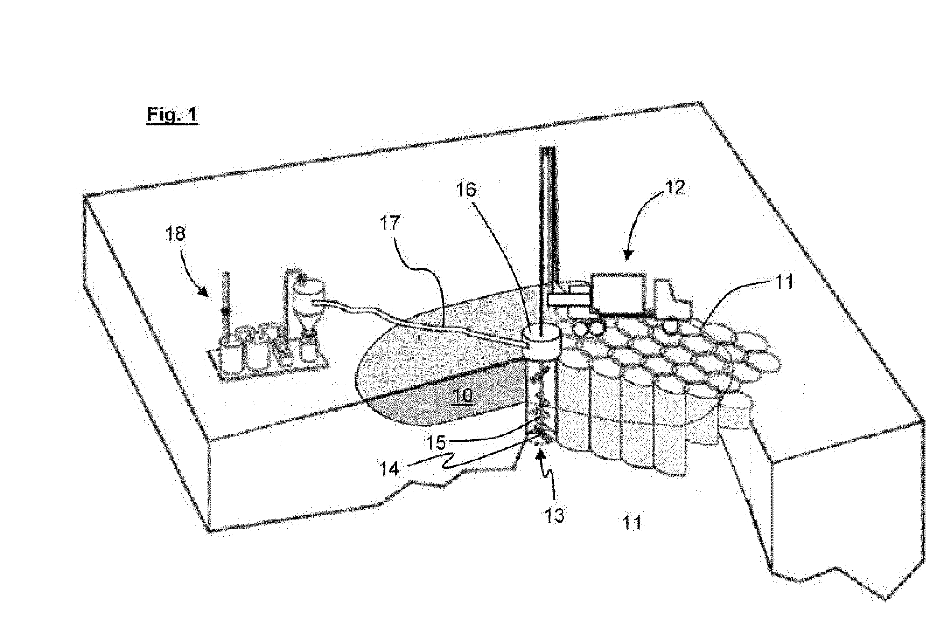

In Figur 1 ist ein unbehandelter kontaminierter Bodenbereich 10 nebst einzelner vertikalen säulenartigen Bereichen 11 zu erkennen. Die säulenartigen Bereiche 11 sind bereits dem erfindungsgemäßen Verfahren unterzogen worden bzw. befinden sich derzeit in einer entsprechenden Behandlung. Die einzelnen nebeneinander geordneten Säulen überlappen sich mit 15 % mit benachbarten Säulen. An einem Fahrzeug 12 befindet sich ein mäklergeführtes Bodenbearbeitungsgerät 13, das sowohl Bohrwerkzeuge 14 als auch Mischflügel 15 zur Durchmengung des Erdreiches aufweist. Bezüglich der Bodenbearbeitungsgeräte wird der Einfachheit halber auf die nach dem Stand der Technik bekannten Vorrichtungen gemäß DE 44 05 303 C1 oder DE 10 2008 002 038 A1 verwiesen.

Das Bohrwerkzeug 14 sowie die Mischflügel 15 können auf- und abwärts bewegt werden. Das Bodenbearbeitungsgerät besitzt zudem eine Abdeckhaube 16, worüber etwa bei der Bodenbearbeitung entstehende Gase über die Leitung 17 abgezogen und einer Gasbehandlungsanlage 18 zugeführt werden. Eine solche Gasbehandlungsanlage kann selbstverständlich entfallen, wenn keine flüchtigen Gase bei der Bodenbearbeitung entstehen bzw. der Anteil des entweichenden Gases bestimmte Toleranzgrenzen nicht überschreitet.

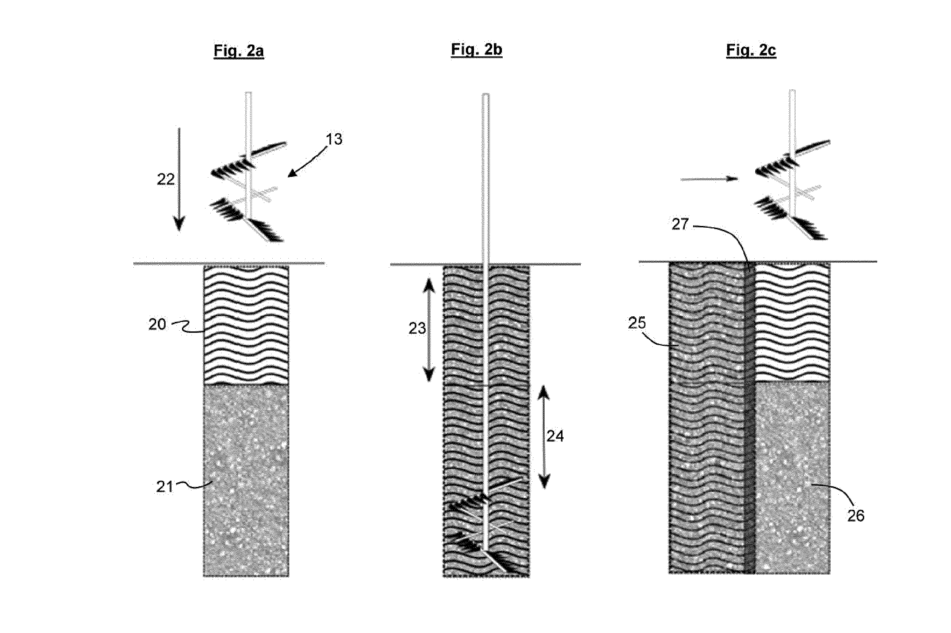

Die Arbeitsweise des erfindungsgemäßen Verfahrens wird aus Fig. 2 deutlich.

Zu Beginn liegt innerhalb einer angenommenen Säule ein kontaminierter Bereich 20 vor, der keinen oder keinen ausreichenden Stützkornanteil hat. Darunter befindet sich ein Bodenbereich 21 mit einer ausreichenden Stützkornmenge. Wird nun zu Beginn des Verfahrens das Werkzeug 13 in Richtung des Pfeils 22 von oben in größere Bodentiefen getrieben, wird bei der Abwärtsbewegung kontaminiertes Material in tieferliegende Bereiche als auch in die Bereiche 21 gefördert. Bei der Aufwärtsbewegung wird Bodenmaterial mit Stützkorn in den Bereich 20 gefördert, so dass, wie aus Fig 2b ersichtlich sich durch mehrfaches Auf- und Abfahren (siehe Doppelpfeile 23 und 24) schließlich eine über die gesamte Säulenhöhe homogene Mischung bestehend aus kontaminierten Material sowie nicht kontaminierten Erdreich mit Stützkorn einstellt. Das Bodenbearbeitungsgerät bzw. die Werkzeuge 14, 15 werden vorzugsweise 2- bis 3-mal auf- und abgefahren.

Aus Fig. 2c ist ersichtlich, dass nebeneinander liegende Säulen 25 und 26 sich in einem angrenzenden Bereich 27 überlappen. Zur nachfolgenden Bearbeitung einer jeden weiteren Säule wird das aus dem bodenherausgezogene Bodenbearbeitungsgerät jeweils horizontal verfahren.

Nach Abschluss der vorbeschriebenen in-situ-vertikal-kontrollierten Homogenisierung kann eine in-situ-Stabilisierung und Verfestigung durch eine Verfahrenswiederholung unter Zugabe eines Bindemittels durchgeführt werden. Ggf. kann die Zugabe eines Bindemittels wie z.B. Zement oder Kalk auch bereits während des in-situ-vertikalkontrollierten Homogenisierungsprozesses durchgeführt werden. Mittels der benutzten mechanischen Werkzeuge des Bodenbearbeitungsgerätes und einer Wasserzugabe wird das aufzubereitende Material derart mit dem unterliegenden Boden durchmischt, dass sich quasi homogene Säulen ergeben. Zur besseren Durchmischbarkeit können anstelle des Mischwassers auch Suspensionen mit Betonit oder anderen reibungsmindernden Zuschlagstoffen beigefügt werden. Hierdurch wird gewährleistet, dass vor dem Einbringen der bindemittelhaltigen Teilsuspension zur Durchführung einer in-situ-Stabilisierung unter Festigung nach dem Stand der Technik der kontaminierte Bereich vollkommen homogen ist.

Die mechanische und homogene Aufbereitung des kontaminierten Bereiches 10 wird säulenförmig in vertikaler Erstreckung durchgeführt. Durch mehrere aneinander angrenzende Säulen können kontaminierte Bereiche in räumlicher Erstreckung homogen aufbereitet werden. In Abhängigkeit der gewünschten Homogenität können die Säulen auch in jeweils überlappender Form ausgeführt werden, so dass verbleibende Bereiche zwischen den Säulen beliebig verkleinert bzw. gänzlich eliminiert werden können. Nach Erhärtung der durchmischten und mit Suspension beaufschlagten und homogenisierten Masse werden Kontaminationen durch chemische Stabilisierung und/oder physikalische Verfestigung derart fixiert, dass im Falle einer Wasserbewegung ein unerwünschter Abtransport der Kontamination zuverlässig verhindert wird. Das erfindungsgemäße Verfahren hat den Vorteil, dass mit den nach dem Stand der Technik bekannten Bodenbearbeitungsgeräten ohne Geruchsbelästigung und ohne Transportbewegungen zu Zwischendeponien oder zu Sondermüllbeseitigungen kontaminierte Bereiche in-situ stabilisiert und verfestigt werden. Durch Unterbrechung möglicher Expositionspfade bzw. zeitlich relevanter Verzögerungen der Schadstoffausbreitung in einem Umweltmedium (Boden und/oder Grundwasser und/oder Bodenluft) ist eine wesentliche Gefährdungsverringerung gegeben. Das behandelte "kontaminierte Material" kann vor Ort belassen werden, wodurch sich in der Regel anwendungsbezogen ökologisch positive Nebeneffekte ergeben, nämlich dass
a) Transportkosten zur Verwertung oder Beseitigung von Abfall vermieden werden,
b) eine Gefährdung der Umwelt bzw. der Bevölkerung durch Transport von Gefahrstoffen entfällt,
c) eine potenzielle Gesundheitsgefährdung von Anwohnern und Arbeitern während der Sanierung verringert werden kann und
d) vorhandene Deponiekapazitäten geschont werden.

Durch die im Untergrund stattfindende in-situ-Stabilisierung und Verfestigung werden lediglich sehr geringe Schadstoffmengen in die Luft überführt. Bedingt durch die für die Arbeitsfolge immanente Vorgehensweise mit aneinander grenzenden und nacheinander hergestellten Säulen werden zusätzlich lediglich kleine Bearbeitungsflächen gleichzeitig unterhalten, wodurch das Emissionspotenzial nochmals reduziert wird. Durch eine Überdeckung des Bohrloches und die Absaugung austretender Gase kann das Emissionspotenzial mit verhältnismäßigem Aufwand nochmals deutlich reduziert werden. Entsprechend einfach können auch geruchsminimierende Maßnahmen durchgeführt werden, was den Einsatz des erfindungsgemäßen Verfahrens insbesondere auch im Nahbereich von Wohngebieten im Innenstadtbereich oder auf bebauten Altlasten erlaubt. Zur Durchführung des erfindungsgemäßen Verfahrens wird ein Werkzeug verwendet, das mit einem Schneidkopf zum Lösen bzw. Lockern des Untergrunds sowie Misch- und Rührflügeln ausgestattet ist in dem konta-minierten Bereich eingedreht werden kann. Über das innere des drehbaren Hohlgestänges und Austrittsöffnungen, welche an den Schneide- und Mischflügeln angebracht sind, wird während des Durchmischungsvorgangs der Mischsäule eine Suspension zugeführt. Das Werkzeug wird innerhalb dieser Säule zur intensiven Homogenisierung bei gleichzeitiger Zugabe einer Suspension gedreht und auf- und abbewegt.

## Patentansprüche

1. Verfahren zur Sanierung kontaminierter Bereiche wie Altablagerungen, Deponien oder deponieähnlicher Ablagerungen und Altkasten, bei denen kontaminiertes Material mit teer-, harz-, öl- oder wachsähnlicher Konsistenz durch Zugabe von Konditionierungsmittel chemisch stabilisiert und physikalisch verfestigt wird,
**dadurch gekennzeichnet, dass**
mittels eines in vertikaler Richtung bewegten Bodenbearbeitungsgerätes zunächst in säulenartigen, sich jeweils am Rand überlappenden Bodenbereichen kontaminiertes Material mit nicht kontaminiertem Bodenmaterial, das einen ausreichenden Stützkornanteil enthält, zu einer zumindest im wesentlichen homogenen Mischung vermengt und anschließend oder gleichzeitig die Konditionierungsmittel zugegeben werden.

2. Verfahren nach Anspruch 1, **dadurch gekennzeichnet, dass** zumindest ein wesentlicher Teil oder sämtliches Bodenmaterial mit einem ausreichenden Stützkornanteil, das zur Schaffung eines stabilen säulenartigen Bereiches benötigt wird, aus den Erdbereichen entnommen wird, die unterhalb des kontaminierten Material liegen.

3. Verfahren nach Anspruch 1 oder 2, **dadurch gekennzeichnet, dass** während der Durchmischung notwendige Zuschlagstoffe zur Bildung eines ausreichenden Korngerüstes über das Bodenbearbeitungsgerät zugeführt werden und/oder bei Bedarf zusätzliches, nicht kontaminiertes Bodenmaterial mit einem ausreichende Stützkornanteil auf das kontaminierte Material aufgebracht und in der Säule zu einem homogenen Gemisch vermengt wird.

4. Verfahren nach Anspruch 1, 2 oder 3, **dadurch gekennzeichnet, dass** Konditionierungsmittel wie Suspensionen mit Betonit oder mit Bindemittel wie Zement oder Kalk (ebenfalls) über das Bodenbearbeitungsgerät zugegeben werden.

5. Verfahren nach einem der Ansprüche 1 bis 4, **dadurch gekennzeichnet, dass** sich die säulenartigen Bodenbereiche zu 5% bis 30% mit den benachbarten Bodenbereichen überlappen.

6. Verfahren nach einem der Ansprüche 1 bis 5, **dadurch gekennzeichnet, dass** die säulenartigen Bereiche jeweils einen Durchmesser von 1,5 m bis 4 m haben.

7. Verfahren nach einem der Ansprüche 1 bis 6, **dadurch gekennzeichnet, dass** jeder säulenartige Bereich mindestens 2 mal auf- und abwärts in der Bearbeitungstiefe von dem Bearbeitungsgerät durchfahren wird.

8. Verfahren nach einem der Ansprüche 1 bis 7, **dadurch gekennzeichnet, dass** die Sink- und Ziehgeschwindigkeit des Bodenbearbeitungsgerätes beim Durchmischen zwischen 0,2 bis 1 m/min bei der Abwärtsbewegung und zwischen 0,5 und 2 m/min bei der Aufwärtsbewegung bei 30 bis 90 U/min liegt.

9. Verfahren nach einem der Ansprüche 1 bis 8, **dadurch gekennzeichnet, dass** die Konditionierungsmittel erst zugegeben werden, wenn die bodenbearbeitenden Säulenbereiche einen hinreichend homogenen Stützkornanteil aufweisen.
